# EUROPÄISCHE PATENTANMELDUNG

(11) **EP 4 509 480 A1**
(43) Veröffentlichungstag der Anmeldung: **19.02.2025**
(21) Anmeldenummer: 24193804.2
(22) Anmeldetag: 09.08.2024
(51) Int. Cl.: C04B 26/06, C04B 26/10, C04B 26/14, C04B 26/16, E01C 7/18, C04B 111/72

(54) **REPARATURVERFAHREN FÜR ASPHALTDECKSCHICHTEN, BINDEMITTEL-ZUSAMMENSETZUNG UND REPARATURMÖRTEL**

(30) Priorität: 10.08.2023 DE 102023121418
(71) Anmelder: KLB Kötztal Lacke + Beschichtungen GmbH, 89335 Ichenhausen (DE)
(72) Erfinder: Weidle, Stefan, 89335 Ichenhausen (DE); Haseidl, Michael, 89335 Ichenhausen (DE); Kehrle, Julian, 89335 Ichenhausen (DE)
(74) Vertreter: Manitz Finsterwald Patent- und Rechtsanwaltspartnerschaft mbB

(57) **Zusammenfassung**

Die vorliegende Erfindung betrifft ein Reparaturverfahren für Asphaltdeckschichten, wobei in eine Schadensstelle einer zu reparierenden Asphaltdeckschicht ein Haftvermittler gefolgt von einem Reparaturmörtel eingebracht werden, wobei der Reparaturmörtel einen mineralischen Zuschlagstoff sowie eine Bindemittel-Zusammensetzung aufweist, wobei die Bindemittel-Zusammensetzung (i) wenigstens eine Verbindung mit zwei oder mehr Isocyanatgruppen sowie wenigstens eine Verbindung mit zwei oder mehr Aminogruppen aufweist, und wobei die Bindemittel-Zusammensetzung durch Additionsreaktion der Isocyanatgruppen und der Aminogruppen abbindet, oder (ii) wenigstens eines von Epoxidharzen, radikalisch härtbare Acrylate oder Polyurethane aufweist.

## Beschreibung

Die vorliegende Erfindung betrifft ein Verfahren zur Instandsetzung von offenporigen Asphaltdeckschichten. Ferner betrifft die vorliegende Erfindung eine geeignete Bindemittel-Zusammensetzung sowie einen geeigneten Reparaturmörtel.

Offenporige Asphalte zeichnen sich durch ein hervorragendes Drainagevermögen aus. Ihre besondere Struktur ermöglicht eine schnelle Ableitung von Oberflächen-, Regen- und Schmelzwasser. Dadurch werden Wasseransammlungen vermieden, die Aquaplaninggefahr vermindert und die Fahrbahnoberfläche auch bei Starkregen weitgehend trocken gehalten, was die Verkehrssicherheit erhöht.

Darüber hinaus zeichnen sich offenporige Asphalte durch eine hohe Lärmminderungsfähigkeit aus. Durch ihre besondere Struktur werden die Rollgeräusche der Fahrzeuge auf der Straße reduziert. Aufgrund von Lärmschutzanforderungen werden offenporige Asphalte immer häufiger eingesetzt. Offenporige Asphalte sind jedoch vergleichsweise teuer und haben eine begrenzte Lebensdauer von ca. 8 bis 12 Jahren. Bisherige Reparaturverfahren für offenporige Asphaltdeckschichten zeigen jedoch unzureichende Haftungseigenschaften, was die Wirksamkeit und Dauerhaftigkeit der Reparaturen einschränkt, insbesondere bei Straßen mit hoher Verkehrsbelastung, wie Straßen mit Belastungsklassen von BK 10, BK32 oder BK100, jeweils nach RStO 12.

Die Instandhaltung von Straßenbelägen ist von großer Bedeutung. Häufige Schadensbilder, insbesondere bei offenporigen Asphalten, sind Ausmagerungen, Rissbildungen, Spurrinnen, Abplatzungen, lokale Schäden wie Löcher und Vertiefungen, Verfärbungen und Verschmutzungen sowie der Verlust der Offenporigkeit.

Darüber hinaus besteht die Notwendigkeit, Unebenheiten, die bei der Herstellung von offenporigen Asphaltschichten entstanden sind, zu korrigieren. Hierfür kommen bisher nur Reparaturmörtel in Frage, die die Oberfläche abdichten und die lärmmindernde und entwässernde Wirkung negativ beeinflussen.

Ausmagerungen entstehen durch die Abnutzung der Oberfläche, die zu einer Reduktion der Gesteinskörnung und des Bindemittels führt. Als Folge kann die strukturelle Integrität der Deckschicht beeinträchtigt werden. Rissbildungen treten insbesondere bei offenporigen Asphalten aufgrund von Spannungen infolge von Temperaturschwankungen und Verkehrsbelastungen auf. Spurrinnen entstehen durch starke Verkehrsbelastung, insbesondere durch schwere Fahrzeuge, wie beispielsweise Lastkraftwagen. Die daraus resultierende unebene Oberfläche der Asphaltdeckschicht beeinträchtigt die Entwässerungseigenschaften eines offenporigen Asphalts. Ausbrüche sind Oberflächendefekte, die durch Ablösung von Teilen der Asphaltdeckschicht, insbesondere in stark belasteten Bereichen, entstehen. Lokale Schäden wie Löcher und Vertiefungen entstehen durch verschiedene Faktoren wie Verschleiß, chemische Einflüsse oder mechanische Belastungen. Insbesondere offenporige Asphalte sind aufgrund ihrer porösen Struktur anfällig für Verfärbungen und Verschmutzungen, die in die offenen Poren eindringen können. Verschmutzungen und Ablagerungen können mit der Zeit auch zum Verlust der Offenporigkeit führen und die Entwässerungsleistung des Asphaltes herabsetzen.

Bei der Reparatur von offenporigen Asphaltschichten wird daher bisher in der Regel die gesamte Dicke der Asphaltschicht und der darin enthaltenen Bitumenschicht einschließlich der Abdichtung erneuert. Wie beim Neubau einer Fahrbahn mit offenporiger Asphaltdeckschicht sollte die Instandsetzung mangels geeigneter Reparaturverfahren auch über die gesamte Fahrbahnbreite erfolgen, um eine gute Entwässerung der Schicht zu gewährleisten.

Der vorliegenden Erfindung liegt die Aufgabe zugrunde, ein verbessertes Verfahren zur Reparatur von Asphaltdeckschichten für Straßen, insbesondere für Autobahnen, Schnellstraßen und Industriestraßen, Wege und andere Verkehrsflächen bereitzustellen. Dabei soll eine hervorragende Haftung zum Untergrundmaterial gewährleistet und eine einfache und schnelle Verarbeitung des Reparaturverfahrens ermöglicht werden. Insbesondere soll ein Verfahren zur Instandsetzung von offenporigem Asphalt entwickelt werden, das keine negativen Auswirkungen auf die Entwässerungsfähigkeit oder die Reduzierung der Fahrgeräusche hat, wobei ein auf der Asphaltschicht aufgebrachter bzw. in die Asphaltschicht eingebrachter Reparaturmörtel eine hervorragende Haftung aufweist.

Zur Lösung der Aufgabe wurde ein neuartiges Reparaturverfahren entwickelt. Das Verfahren umfasst die in Anspruch 1 angegebenen Schritte. Zusätzlich tragen die Bindemittelzusammensetzung gemäß Anspruch 23 und der Reparaturmörtel gemäß Anspruch 24 zur Lösung bei.

Gemäß der vorliegenden Erfindung wird ein Reparaturverfahren für Asphaltdeckschichten bereitgestellt, bei dem in eine zu reparierende Schadstelle einer Asphaltdeckschicht ein Haftvermittler und anschließend ein Reparaturmörtel eingebracht werden. Der Reparaturmörtel weist einen mineralischen Zuschlagstoff und eine Bindemittel-Zusammensetzung auf. Die Bindemittelzusammensetzung umfasst (i) wenigstens eine Verbindung mit zwei oder mehr Isocyanatgruppen sowie wenigstens eine Verbindung mit zwei oder mehr Aminogruppen, wobei die Bindemittel-Zusammensetzung durch Additionsreaktion der Isocyanatgruppen und der Aminogruppen abbindet, oder (ii) wenigstens eines von Epoxidharzen, radikalisch härtbaren Acrylaten oder Polyurethane.

Die vorliegende Erfindung ermöglicht eine verbesserte Instandsetzung von Straßenbelägen, insbesondere von offenporigen Asphalten. Durch das Zusammenwirken des Haftvermittlers und des Reparaturmörtels eignet sich das erfindungsgemäße Reparaturverfahren zur Sanierung von Schadstellen und Ausbrüchen in drainagefähigen, offenporigen Asphalten. Insbesondere können mit dem erfindungsgemäßen Verfahren schnell erhärtende Reparaturmörtel verwendet werden, so dass die reparierte Schadstelle schnell wieder nutzbar ist. Die reparierte Schadstelle weist eine Drainagefähigkeit sowie eine Lärmminderungsfähigkeit auf. Mit dem Reparaturverfahren der vorliegenden Erfindung kann die Drainagefähigkeit der Asphaltdeckschicht auch dann erhalten werden, wenn die Fahrbahn nicht über die gesamte Fahrbahnbreite repariert wird. Insbesondere bei mehrspurigen Straßen ist somit für die Reparatur einzelner Schadstellen keine Vollsperrung der Fahrbahn notwendig, sondern einzelne Fahrspuren können für den Verkehr offengehalten werden. Die einfache und schnelle Durchführbarkeit des erfindungsgemäßen Verfahrens führt somit zu einer erheblichen Vereinfachung der Reparaturprozesse und zu einer gesteigerten Effizienz bei der Instandhaltung von Straßen und Verkehrswegen.

Vorzugsweise ist die reparierte Schadstelle nach Abschluss des erfindungsgemäßen Reparaturverfahrens mit einem 2-Schicht-System, bestehend aus dem Haftvermittler und dem Reparaturmörtel, verfüllt. Das bedeutet, dass bei dem 2-Schicht-System, eine durch den Haftvermittler erzeugte Schicht und eine durch den Reparaturmörtel erzeugte Schicht vorliegt. Bei Verwendung zusätzlicher Schichten erhöht sich der Arbeits- und der Zeitaufwand für die Durchführung des Reparaturverfahrens. Somit stellt die Anfertigung eines 2-Schicht-Systems eine Verringerung des Reparaturaufwands gegenüber Schichtsystemen mit 3 oder mehr Schichten dar.

Grundsätzlich können bei dem erfindungsgemäßen Reparaturverfahren verschiedenste Bindemittelzusammensetzungen auf Basis der in Anspruch 1 genannten Amin- und Isocyanatverbindungen eingesetzt werden. Gemäß einer bevorzugten Ausführungsform des erfindungsgemäßen Reparaturverfahrens weist die Verbindung mit mindestens zwei Aminogruppen, insbesondere mit zwei Aminogruppen, in der Bindemittelzusammensetzung mindestens zwei, insbesondere zwei sekundäre Aminogruppen auf. Die Additionsreaktion zwischen Isocyanatgruppen und sekundären Aminogruppen verläuft langsamer als zwischen primären Aminogruppen und Isocyanatgruppen. Obwohl eine schnelle Aushärtung des Reparaturmörtels erwünscht ist, muss ausreichend Zeit für das Anmischen und Einbringen des Reparaturmörtels in die Schadstelle zur Verfügung stehen. Als vorteilhaft im Hinblick auf die Ausgewogenheit zwischen der Aushärtegeschwindigkeit des Reparaturmörtels und der Verarbeitungszeit hat sich die Verwendung von Verbindungen mit mindestens zwei sekundären Aminogruppen erwiesen. Besonders vorteilhaft hinsichtlich dieser Ausgewogenheit ist eine Kombination dieser Amine mit aliphatischen Diisocyanaten.

Als besonders geeignet haben sich Verbindungen mit mindestens zwei Aminogruppen erwiesen, die Aminogruppen als Aminosäureester-Strukturfragmente aufweisen, vorzugsweise in Form eines oder mehrerer Polyasparaginsäureester.

Bei dem erfindungsgemäßen Reparaturverfahren ist es im Hinblick auf die Ausgewogenheit von Verarbeitungszeit und Aushärtezeit vorteilhaft, wenn die Verbindung mit mindestens zwei Aminogruppen ein Diamin ist, insbesondere ein Diamin mit zwei sekundären Aminogruppen.

Die bei dem erfindungsgemäßen Reparaturverfahren eingesetzte Bindemittelzusammensetzung ist nicht auf bestimmte Isocyanatverbindungen beschränkt, wobei sich bestimmte Isocyanatverbindungen als vorteilhaft erwiesen haben. Gemäß einer bevorzugten Ausführungsform der vorliegenden Erfindung handelt es sich bei der Verbindung mit zwei oder mehr Isocyanatgruppen um ein aliphatisches Diisocyanat, insbesondere um 1 ,6-Hexamethylendiisocyanat (HDI) oder ein auf HDI basierendes Prepolymer oder Oligomer. Die Reaktivität der aliphatischen Isocyanate trägt ebenfalls zu einem ausgewogenen Verhältnis zwischen Härtungsgeschwindigkeit und Verarbeitungszeit bei. Insbesondere in Kombination mit den oben genannten Verbindungen mit sekundären Aminogruppen lässt sich ein hervorragendes ausgewogenes Verhältnis erzielen. Diese spezifische Kombination ermöglicht auch eine ausgezeichnete Haftung des Reparaturmörtels in der Schadstelle.

Gemäß einer weiteren bevorzugten Ausführungsform der vorliegenden Erfindung ist die Verbindung mit zwei oder mehr Isocyanatgruppen ein aromatisches Diisocyanat, insbesondere ein Methylendi(phenylisocyanat) (MDI) oder ein auf MDI basierendes Prepolymer oder Oligomer. Durch die Verwendung aromatischer Diisocyanate können sehr hohe Reaktionsgeschwindigkeiten erreicht werden, was insbesondere bei niedrigen Temperaturen von Vorteil sein kann.

Gemäß einer bevorzugten Ausführungsform der vorliegenden Erfindung ist in der Bindemittelzusammensetzung das Verhältnis der Verbindung(en) mit zwei oder mehr Isocyanatgruppen zu der Verbindung(en) mit zwei oder mehr Aminogruppen derart eingestellt, dass der stöchiometrische Überschuss der Isocyanatgruppen gegenüber den Aminogruppen oder dass der stöchiometrische Überschuss der Aminogruppen gegenüber den Isocyanatgruppen kleiner oder gleich 30 Mol-%, insbesondere kleiner oder gleich 10 Mol-% ist. höchst bevorzugt von kleiner oder gleich 5 Mol-%. Dadurch wird sichergestellt, dass der Reparaturmörtel nach dem Aushärten eine ausgezeichnete mechanische Festigkeit und eine gute Haftung zur Asphaltdeckschicht aufweist.

Erfindungsgemäß ist bei dem Reparaturverfahren das Bindemittel entweder (i) wenigstens eine Verbindung mit zwei oder mehr Isocyanatgruppen sowie wenigstens eine Verbindung mit zwei oder mehr Aminogruppen aufweist, und wobei die Bindemittel-Zusammensetzung durch Additionsreaktion der Isocyanatgruppen und der Aminogruppen abbindet, oder (ii) wenigstens eines von Epoxidharzen, radikalisch härtbare Acrylate oder radikalisch härtbare Polyurethane aufweist.

Gemäß einer bevorzugten Ausführungsform ist das in Alternative (ii) genannte Bindemittel ein Epoxidharz, insbesondere ein Di- oder Oligoamin-gehärtetes Glycidylether-basiertes Harz. Das Epoxidharz kann ein elastifiziertes Epoxidharz sein, beispielsweise eines, das ein mit blockierten Isocyanatgruppen modifiziertes Prepolymer enthält.

Gemäß einer anderen bevorzugten Ausführungsform ist das in Alternative (ii) genannte Bindemittel ein Acrylat-basiertes Bindemittel, welches insbesondere Acrylat-basierte Gruppen und/oder Methacrylat-basierte Gruppen umfasst und radikalisch zu einem Polyacrylat bzw. Polymethacrylat, wie Polymethylmethacrylat, oder entsprechenden gegebenenfalls vernetzen Copolymeren aus Acrylaten und Methacrylaten polymerisiert.

Gemäß einer noch weiteren bevorzugten Ausführungsform ist das in Alternative (ii) genannte Bindemittel ein Polyurethan-basiertes Bindemittel, welches auf wenigstens einer Polyol-Verbindung und wenigstens einer Isocyanat-Verbindung basiert.

Bei dem erfindungsgemäßen Reparaturverfahren liegt der Gewichtsanteil der Bindemittelzusammensetzung im Reparaturmörtel, bezogen auf das kombinierte Gewicht von Bindemittel und mineralischen Zuschlagstoffen, im Bereich von 5 bis 12 Gew.-%, insbesondere im Bereich von 6 bis 10 Gew.-%. Mit der Bindemittelzusammensetzung in diesem Bereich wird eine hohe mechanische Festigkeit des Reparaturmörtels sowie eine gute Haftung zur Asphaltdeckschicht erreicht.

Grundsätzlich können für den bei dem erfindungsgemäßen Verfahren eingesetzten Reparaturmörtel unterschiedliche mineralische Zuschlagstoffe verwendet werden. Zur Erzielung einer offenporigen Struktur sind mineralische Zuschlagstoffe vorteilhaft, die einen Sieblinienbereich aufweisen, der im Bereich von 0 bis 32 mm, vorzugsweise von 0,5 bis 16 mm, bevorzugter von 1 bis 16 mm und noch bevorzugter von 1 bis 10 mm, besonders bevorzugt von 1 bis 5 mm liegt. Der Sieblinienbereich ist durch Analysensiebe nach DIN ISO 3310-2:2015-07 bestimmbar.

Der bei dem erfindungsgemäßen Verfahren verwendete Haftvermittler sorgt für einen guten Verbund des Reparaturmörtels mit der Asphaltdeckschicht. Vorzugsweise wird der Haftvermittler in Form einer Polyurethanreaktionsmischung in die Schadstelle eingebracht. Mit Polyurethanreaktionsmischungen als Haftvermittler kann eine besonders stabile Haftung des Reparaturmörtels in der Schadstelle erreicht werden. Um eine gute Drainagefähigkeit zu gewährleisten, ist es vorteilhaft, den Haftvermittler in einer Menge in die Schadstelle einzubringen, die die Poren des Asphaltes nicht verschließt.

Gemäß einer alternativen bevorzugten Ausführungsform der vorliegenden Erfindung wird der Haftvermittler als eine 1-Komponenten Isocyanat-basierte Grundierung in die Schadstelle eingebraucht.

Grundsätzlich kann der Haftvermittler unabhängig von den Bindemitteln gewählt werden und ist gemäß bevorzugter Ausführungsformen ein Epoxidharz, insbesondere ein Amin-gehärtetes Glycidylether-basiertes Harz, oder ein Acrylat-basierter Haftvermittler, der Acrylat-basierte Gruppen und/oder Methacrylat-basierte Gruppen umfasst und radikalisch zu einem Polyacrylat bzw. Polymethacrylat, wie Polymethylmethacrylat, oder entsprechenden gegebenenfalls vernetzen Copolymeren aus Acrylaten und Methacrylaten polymerisiert, oder ein Polyurethan-basierter Haftvermittler, der auf wenigstens einer Polyol-Verbindung und wenigstens einer Isocyanat-Verbindung basiert.

Die Zusammensetzung des Reparaturmörtels, d.h. die Bindemittelzusammensetzung und die mineralischen Zuschlagstoffe, ist bei dem erfindungsgemäßen Verfahren vorzugsweise so eingestellt, dass der Reparaturmörtel zu einem offenporigen Material aushärtet.

Bei dem erfindungsgemäßen Reparaturverfahren wird der Reparaturmörtel vorzugsweise mit einer Temperatur von 40°C oder weniger, insbesondere mit einer Temperatur von 35°C oder weniger, in die Schadstelle eingebracht. Höhere Temperaturen beschleunigen das Abbinden der Bindemittel-Zusammensetzung und verkürzen damit die Verarbeitungszeit. Bei Temperaturen oberhalb der genannten Grenzwerte kann es dazu kommen, dass der Reparaturmörtel keine hohe mechanische Haftung zur Asphaltdeckschicht aufweist, da das Abbinden der darin enthaltenen Bindemittel-Zusammensetzung bereits vor dem Einbringen in die Schadstelle einsetzt. Die Temperatur des Reparaturmörtels kann mit einem Thermometer gemessen werden.

Bei dem erfindungsgemäßen Reparaturverfahren wird die im Reparaturmörtel enthaltene Bindemittelzusammensetzung vorzugsweise so eingestellt, dass der Reparaturmörtel bei einer Verarbeitungstemperatur im Bereich von 10 bis 30 °C eine Verarbeitungszeit von 5 bis 60 Minuten aufweist. Durch Verwendung von sterisch gehinderten Aminen oder aliphatischen Isocyanaten in der Bindemittelzusammensetzung kann die Verarbeitungszeit erhöht werden. Primäre Amine, aromatische Isocyanate oder Katalysatoren in der Bindemittel-Zusammensetzung können die Verarbeitungszeit verkürzen.

Bei dem erfindungsgemäßen Reparaturverfahren wird der Reparaturmörtel vorzugsweise in einer Menge von 1,3 bis 2,5 kg pro mm/m² aufgetragen. Dabei bezeichnet "mm" die Dicke der aufgetragenen Mörtelschicht und "m²" die Fläche der zu reparierenden Schadstelle. Mit einer Menge im angegebenen Bereich ist ein ausgewogenes Verhältnis zwischen Drainage- und Lärmminderungsfähigkeit einerseits und mechanischer Belastbarkeit andererseits erreicht. Bei Überschreitung der angegebenen Menge kann die Drainage- und Lärmminderungsfähigkeit beeinträchtigt werden. Umgekehrt kann eine Unterschreitung der angegebenen Menge zu einer Verringerung der mechanischen Belastbarkeit der reparierten Stelle führen.

Das Reparaturverfahren der vorliegenden Erfindung wird vorzugsweise bei einer Temperatur von 0 °C oder darüber, insbesondere bei einer Temperatur von 5 °C oder darüber, durchgeführt. Diese untere Temperaturgrenze ist im Hinblick auf die Aushärtungsgeschwindigkeit des Reparaturmörtels vorteilhaft. Bei niedrigeren Temperaturen müssten der Bindemittelzusammensetzung Beschleuniger, z. B. Katalysatoren, in größeren Mengen zugesetzt werden, um eine ausreichend hohe Abbindegeschwindigkeit zu erreichen. Die genannte Mindesttemperatur bezieht sich insbesondere auf die Lufttemperatur und/oder die Temperatur der zu reparierenden Asphaltdeckschicht. Die Lufttemperatur und die Temperatur der zu reparierenden Asphaltdeckschicht kann mit einem Thermometer gemessen werden.

Das erfindungsgemäße Reparaturverfahren umfasst ferner vorzugsweise, dass die zu reparierende Schadstelle vor dem Aufbringen des Haftvermittlers von losen Teilen, insbesondere Asphaltresten, und haftungsmindernden Substanzen, insbesondere Öl, Wasser und Staub, gereinigt wird. Diese Reinigung kann beispielsweise durch Kehren, Saugen oder Blasen erfolgen und ermöglicht eine bessere Haftung des bei dem erfindungsgemäßen Verfahren gebildeten Systems aus Haftvermittler und Reparaturmörtel an der Asphaltdeckschicht.

Das erfindungsgemäße Reparaturverfahren ermöglicht eine schnelle Straßenreparatur. Vorzugsweise wird das erfindungsgemäße Verfahren so durchgeführt, dass die reparierte Schadstelle innerhalb von 6 Stunden, noch bevorzugter innerhalb von 4 Stunden, noch bevorzugter innerhalb von 3 Stunden wieder mechanisch belastbar ist. Dies bedeutet, dass vorzugsweise innerhalb von 6 Stunden, bevorzugter innerhalb von 4 Stunden, noch bevorzugter innerhalb von 3 Stunden die reparierte Schadstelle wieder für den Verkehr freigegeben wird. Die Zeitangaben innerhalb von 6 Stunden, innerhalb von 4 Stunden und innerhalb von 3 Stunden beziehen sich jeweils auf den Zeitraum, ab dem die Schadstelle mit dem Reparaturmörtel verfüllt wird, bei 20°C Luft- und Bodentemperatur. Die schnelle Freigabe der reparierten Schadstelle für den Verkehr stellt eine wesentliche Entlastung bei der Straßeninstandsetzung dar.

Das erfindungsgemäße Reparaturverfahren ist bevorzugt auch dann anwendbar, wenn die Schadstelle der zu reparierenden Asphaltdeckschicht in einer stark belasteten Straße liegt. Eine stark belastete Straße ist eine Straße mit einer Belastungsklasse nach den "Richtlinien für die Standardisierung des Oberbaus von Verkehrsflächen 2012" (RStO12) von BK 10 oder höher, insbesondere von BK 32 oder höher. Bei bekannten Verfahren ist, wie bereits eingangs erwähnt, die Haftung des Reparaturmörtels nicht ausreichend, um bei stark belasteten Straßen, insbesondere von BK 32 oder höher, eine langfristige und dauerhafte Reparatur zu ermöglichen.

In der Regel sind Autobahnen, Schnellstraßen und Industriestraßen Straßen mit einer Belastungsklasse von BK 32 oder höher.

Ferner betrifft die vorliegende Erfindung eine Bindemittel-Zusammensetzung zur Bereitstellung eines Reparaturmörtels zur Durchführung eines Reparaturverfahrens gemäß der vorliegenden Erfindung. Die Bindemittel-Zusammensetzung kann vorzugsweise einzelne, beliebige Kombinationen oder alle hierin als in irgendeiner Weise vorteilhaft beschriebenen Merkmale der hierin im Zusammenhang mit dem erfindungsgemäßen Reparaturverfahren beschriebenen Bindemittel-Zusammensetzung aufweisen.

Ebenso betrifft die vorliegende Erfindung einen Reparaturmörtel zur Durchführung eines Reparaturverfahrens gemäß der vorliegenden Erfindung. Der Reparaturmörtel kann vorzugsweise einzelne, beliebige Kombinationen oder alle hierin als in irgendeiner Weise vorteilhaft beschriebenen Merkmale des Reparaturmörtels sowie seiner hierin im Zusammenhang mit dem erfindungsgemäßen Reparaturverfahren beschriebenen Bestandteile aufweisen.

### Beispiele

Die Erfindung wird im Folgenden anhand von Beispielen veranschaulicht, die jedoch den Schutzumfang nicht einschränken.

Zur Untersuchung der Drainagefähigkeit, der Haftfähigkeit sowie der Griffigkeit des Reparaturmörtels wurden mehrere Probekörper hergestellt. Dazu wurden aus offenporigen Asphaltschichten PA8 Bohrkerne mit einem Durchmesser von 220 mm und einer Höhe von 4 cm entnommen. Diese Bohrkerne wurden zunächst mit einem Besen gereinigt. Anschließend wurde entsprechend dem erfindungsgemäßen Instandsetzungsverfahren ein Haftvermittler mit einem Pinsel aufgetragen, ohne die offenporige Struktur der Asphaltschicht zu verschließen. Innerhalb von 0,5 bis 2,0 Stunden wurde darauf ein frisch angemischter Reparaturmörtel in Schichtdicken von 6 mm bzw. 20 mm unter leichtem Andrücken mit einer Kelle aufgetragen.

Der Reparaturmörtel war ca. 10 Minuten verarbeitbar. Nach 25 Minuten war die Materialfestigkeit des Reparaturmörtels so hoch, dass eine manuelle Zerstörung nicht mehr möglich war. Einzelheiten zum verwendeten Haftvermittler und Reparaturmörtel sind in Tabelle 1 aufgeführt:

**Tabelle 1:**

| Komponente | Bestandteil | Bezeichnung |
|---|---|---|
| Haftvermittler | Polyurethanreaktionsmischung | Kötztaler Asphaltbindemittel PU 5901 Primer |
| | | |
| | Diisocyanat | HDI basiertes Oligomer |
| Bindemittel-Zusammensetzung | Diamin | Polyasparaginsäureester |
| Mineralischer Zuschlagstoff | Synthetischer Zuschlagstoff | Chromerzschlacke 1 - 2 mm |

Zur Herstellung des Reparaturmörtels wurde ein Gewichtsteil der Bindemittelzusammensetzung mit 12,5 Gewichtsteilen mineralischem Zuschlagstoff homogen vermischt.

### Prüfung der Griffigkeit:

Der ausgehärtete Reparaturmörtel weist eine augenscheinlich hohe Griffigkeit auf, die über der Griffigkeit der offenporigen Asphaltschicht PA8 liegt. Prüfkörper mit einer Schichtdicke des Reparaturmörtels von 6 mm und 20 mm wurden einer Verkehrssimulation nach dem FAP-Verfahren der DIN EN 12697-49 unterzogen. Nach 270.000 Überrollungen wurde ein FAP-Wert von 0,86 Einheiten ermittelt. Für einen offenporigen Asphaltbelag mit einer Gesteinskörnung PSV 63 wurde nach dem gleichen Verfahren nach 270.000 Überrollungen ein FAP-Wert von 0,50 Einheiten ermittelt.

Das erfindungsgemäße Instandsetzungsverfahren sowie der erfindungsgemäße Instandsetzungsmörtel führen somit zu einer sehr guten Griffigkeit der reparierten Stelle.

### Haftfestigkeit:

Die Haftfestigkeit wurde in Anlehnung an DIN EN 13596 ermittelt. Bei Prüfkörpern mit 6 mm Reparaturmörtelschicht wurde ohne mechanische Vorbelastung eine Abreißfestigkeit von 0,61 N/mm² festgestellt, die Abreißfestigkeit nach 270.000 Überrollungen betrug 0,52 N/mm². Mit und ohne Vorbelastung wurde bei einer Schichtdicke des Reparaturmörtels von 6 mm ein kohäsiver Abriss der Asphaltdeckschicht beobachtet, d.h. die Haftung des 2-Schichtsystems aus Haftvermittler und Reparaturmörtel übersteigt den kohäsiven Zusammenhalt der offenporigen Asphaltschicht. Bei Prüfkörpern mit 20 mm Reparaturmörtelschicht wurde ohne mechanische Vorbelastung eine Abreißfestigkeit von 0,60 N/mm² festgestellt, die Abreißfestigkeit nach 270.000 Überrollungen betrug 0,52 N/mm². Bei den Probekörpern mit einer 20 mm dicken Reparaturmörtelschicht wurde ein Adhäsionsbruch beobachtet, d. h. an der Schichtgrenze zwischen dem 2-Schicht-System aus Haftvermittler und Reparaturmörtel und der Asphaltschicht kam es zu einem adhäsiven Versagen.

Die Abreißfestigkeiten der Varianten mit unterschiedlichen Schichtdicken liegen auf einem ähnlichen Niveau. Nach der Belastung liegt die Haftzugfestigkeit immer noch bei ca. 85 % des Ausgangsniveaus.

### Drainagefähigkeit:

Bei der Prüfung der Griffigkeit nach dem FAP-Verfahren wurde Quarzmehl (Millisil W 6) verwendet, das, wie die Haftversuche zeigten, durch den Reparaturmörtel und den offenporigen Asphalt hindurchdrang. Dies konnte sowohl bei den Probekörpern mit 6 mm Reparaturmörtelschicht als auch bei den Probekörpern mit 20 mm Reparaturmörtelschicht, d. h. bei kohäsivem und adhäsivem Abriss, anhand der nach den Abrissversuchen unter den abgerissenen Abschnitten beobachteten weißen Schicht festgestellt werden.

## Patentansprüche

1. Reparaturverfahren für Asphaltdeckschichten,
wobei in eine Schadensstelle einer zu reparierenden Asphaltdeckschicht ein Haftvermittler gefolgt von einem Reparaturmörtel eingebracht werden, wobei der Reparaturmörtel einen mineralischen Zuschlagstoff sowie eine Bindemittel-Zusammensetzung aufweist,
wobei die Bindemittel-Zusammensetzung
(i) wenigstens eine Verbindung mit zwei oder mehr Isocyanatgruppen sowie wenigstens eine Verbindung mit zwei oder mehr Aminogruppen aufweist, und wobei die Bindemittel-Zusammensetzung durch Additionsreaktion der Isocyanatgruppen und der Aminogruppen abbindet, oder
(ii) wenigstens eines von Epoxidharzen, radikalisch härtbare Acrylate oder Polyurethane aufweist.

2. Reparaturverfahren nach Anspruch 1,
wobei die reparierte Schadstelle nach Durchführung des Reparaturverfahrens mit einem 2-Schicht-System, bestehend aus einer durch den Haftvermittler erzeugten Schicht und einer durch den Reparaturmörtel erzeugten Schicht, verfüllt ist.

3. Reparaturverfahren nach Anspruch 1 oder 2,
wobei die Verbindung mit wenigstens zwei Aminogruppen in der Bindemittelzusammensetzung wenigstens zwei sekundäre Aminogruppen aufweist, und/oder
wobei die Verbindung mit wenigstens zwei Aminogruppen die Amino-Gruppen als Aminosäureester-Strukturfragmente aufweist, vorzugsweise in Form eines oder mehrerer Polyasparaginsäureester, und/oder
wobei die Verbindung mit wenigstens zwei Aminogruppen ein Diamin ist, insbesondere ein Diamin mit zwei sekundären Aminogruppen.

4. Reparaturverfahren nach einem der vorstehenden Ansprüche, wobei die Verbindung mit zwei oder mehr Isocyanatgruppen eine aliphatisches Diisocyanat ist, insbesondere 1,6-Hexamethylendiisocyanat (HDI) oder ein auf HDI basierendes Prepolymer oder Oligomer, und/oder wobei die Verbindung mit zwei oder mehr Isocyanatgruppen ein aromatisches Diisocyanat ist, insbesondere ein Methylendi(phenylisocyanat) (MDI) oder ein auf MDI basierendes Prepolymer oder Oligomer.

5. Reparaturverfahren nach einem der vorstehenden Ansprüche,
wobei die Bindemittel-Zusammensetzung die Verbindung(en) mit zwei oder mehr Isocyanatgruppen sowie Verbindung(en) mit zwei oder mehr Aminogruppen in einem Verhältnis aufweist, dass in der Bindemittel-Zusammensetzung der stöchiometrische Überschuss der Isocyanatgruppen gegenüber den Aminogruppen oder
der stöchiometrische Überschuss der Aminogruppen gegenüber den Isocyanatgruppen kleiner gleich 30 Mol.-% beträgt, insbesondere kleiner gleich 10 Mol.-%.

6. Reparaturverfahren nach einem der vorstehenden Ansprüche,
wobei in dem Reparaturmörtel der Gewichtsanteil der Bindemittel-Zusammensetzung, bezogen auf das kombinierte Gewicht von Bindemittel-Zusammensetzung und mineralischen Zuschlagstoff(en), im Bereich von 5 bis 12 Gew.-%, insbesondere im Bereich von 6 bis 10 Gew.-%, liegt.

7. Reparaturverfahren nach einem der vorstehenden Ansprüche,
wobei der mineralische Zuschlagstoff eine Sieblinienbereich aufweist, der zwischen 0 und 32 mm, bevorzugt zwischen 0,5 und 16 mm, bevorzugter zwischen 1 und 16 mm, und insbesondere zwischen 2 und 11 mm liegt.

8. Reparaturverfahren nach einem der vorstehenden Ansprüche,
wobei der Haftvermittler als eine Polyurethanreaktionsmischung in die Schadstelle eingebracht wird, und/oder
wobei der Haftvermittler in einer Menge in die Schadstelle eingebracht wird, welche die Poren des Asphalts nicht verschließt, und/oder
wobei der Reparaturmörtel zu einem offenporigen Material aushärtet.

9. Reparaturverfahren nach einem der vorstehenden Ansprüche,
wobei das Reparaturverfahren bei einer Temperatur von 0°C oder mehr, insbesondere bei einer Temperatur von 5°C oder mehr, durchgeführt wird, wobei sich die Temperatur auf die Temperatur der Luft bezieht, oder wobei sich die Temperatur auf die Temperatur der zu reparierenden Asphaltdeckschicht bezieht.

10. Reparaturverfahren nach einem der vorstehenden Ansprüche,
wobei die zu reparierende Schadstelle vor Einbringen des Haftvermittlers von losen Teilen, insbesondere Asphaltreste, und haftvermindernden Substanzen, insbesondere Öl, Wasser und Staub, gereinigt wird.

11. Reparaturverfahren nach einem der vorstehenden Ansprüche,
wobei die reparierte Schadstelle innerhalb von 6 Stunden mechanisch beanspruchbar ist, bevorzugt innerhalb von 4 Stunden, besonders bevorzugt innerhalb von 3 Stunden, bei 20°C Luft- und Bodentemperatur.

12. Reparaturverfahren nach einem der vorstehenden Ansprüche,
wobei der Reparaturmörtel in einer Menge von 1,3 bis 2,5 kg pro mm/m² eingebracht wird, wobei "mm" die Schichtdicke angibt und "m²" die Fläche der zu reparierenden Schadstelle.

13. Reparaturverfahren nach einem der vorstehenden Ansprüche,
wobei die Schadstelle der zu reparierenden Asphaltdeckschicht in einer Straße mit einer Belastungsklasse nach RStO12 von BK 10 oder höher, insbesondere von BK 32 oder höher vorliegt.

14. Bindemittel-Zusammensetzung für die Bereitstellung eines Reparaturmörtels zur Durchführung eines Reparaturverfahrens nach einem der vorstehenden Ansprüche.

15. Reparaturmörtel zur Durchführung eines Reparaturverfahrens nach einem der vorstehenden Ansprüche.
